# EUROPÄISCHE PATENTSCHRIFT

(11) **EP 2 781 938 B1**
(45) Veröffentlichungstag und Bekanntmachung des Hinweises auf die Patenterteilung: **13.01.2016**
(21) Anmeldenummer: 14152890.1
(22) Anmeldetag: 28.01.2014
(51) Int. Cl.: G01V 8/10, G01S 7/497, G01S 17/88

(54) **Optischer Sensor**
Optical sensor
Capteur optique

(30) Priorität: 18.03.2013 DE 102013102745
(43) Veröffentlichungstag der Anmeldung: 24.09.2014
(73) Patentinhaber: Leuze electronic GmbH + Co KG, 73277 Owen/Teck (DE)
(72) Erfinder: Lohmann Dr., Lutz, 82140 Olching (DE); Luthard, Stephan, 82256 Fürstenfeldbruck (DE)
(74) Vertreter: Ruckh, Rainer Gerhard

(56) Entgegenhaltungen:
- DE-A1-102010 022 159
- DE-B3-102012 102 395
- US-A1- 2002 018 285

## Beschreibung

Die Erfindung betrifft einen optischen Sensor gemäß dem Oberbegriff des Anspruchs 1.

Ein derartiger optischer Sensor ist aus der DE 10 2010 022 159 A1 bekannt.

Der dort beschriebene optische Sensor dient zur Erfassung von Objekten innerhalb eines Überwachungsbereichs und umfasst eine innerhalb eines Gehäuses angeordnete, um eine Drehachse drehbare Sende-/Empfangseinheit. Die Sende-/Empfangseinheit umfasst einen Sendelichtstrahlen emittierenden Sender und einen Empfangslichtstrahlen empfangenden Empfänger. Die Sendelichtstrahlen und/oder die Empfangslichtstrahlen sind durch ein Fenster des Gehäuses geführt, welches ein optisches Mittel zur Strahlformung der Sendelichtstrahlen und/oder Empfangslichtstrahlen bildet.

Ein Vorteil dieses optischen Sensors besteht darin, dass die rotierende Sende-/Empfangseinheit mit ihrem Sender und Empfänger dicht an das Fenster des Gehäuses herangeführt sein kann. Der Lichtweg der Sendelichtstrahlen und Empfangslichtstrahlen zwischen Sende-/Empfangseinheit und Fenster, der nicht durch einen Tubus oder dergleichen geschützt ist, kann daher sehr klein dimensioniert werden, so dass nahezu keine Verluste durch interne Reflexionen des Sendelichtstrahls und Empfangslichtstrahls innerhalb des Gehäuses auftreten. Weiterhin ist vorteilhaft, dass auf eine separate Ablenkeinheit verzichtet werden kann. Dadurch kann einerseits die Baugröße des optischen Sensors erheblich verringert werden. Zudem werden unerwünschte Deformationen der Strahlquerschnitte des Sendelichtstrahls und Empfangslichtstrahls, die bei der Reflexion an einer Ablenkeinheit entstehen würden, vermieden.

Insbesondere bei der Ausbildung derartiger optischer Sensoren als Sicherheitssensoren, die im Bereich des Personenschutzes eingesetzt werden, ist es erforderlich, die Funktionsfähigkeit der Sende-/Empfangseinheit eines solchen optischen Sensors fortlaufend zu testen.

Bei bekannten optischen Sensoren, insbesondere auch bei dem in der DE 10 2010 022 159 A1 beschriebenen Sensor, sind hierzu an dem Fenster des Gehäuses Referenzelemente angeordnet. In vorgegebenen Drehpositionen treffen dann die Sendelichtstrahlen auf die Referenzelemente und werden von diesen zum Empfänger zurückreflektiert. Anhand der dabei registrierten Pegel der Empfangssignale am Ausgang des Empfängers kann beurteilt werden, ob die Sende-/Empfangseinheit fehlerfrei arbeitet oder nicht. Nachteilig hierbei ist zum einen, dass durch die Referenzelemente ein Teil des Fensters versperrt wird, so dass dort die Sendelichtstrahlen nicht mehr in den Überwachungsbereich gelangen, das heißt dort ist keine Detektion von Objekten im Überwachungsbereich mehr möglich. Dies führt zu einer unerwünschten Reduzierung der Detektionssicherheit des optischen Sensors. Weiterhin ist nachteilig, dass durch das Fenster einfallendes Fremdlicht die Referenzmessung gegen die Referenzelemente beeinflusst. Dadurch kann die Überprüfung der Funktionssicherheit der Sende-/Empfangseinheit beeinträchtigt werden.

Der Erfindung liegt die Aufgabe zugrunde, bei einem optischen Sensor der eingangs genannten Art eine möglichst fehlersichere Funktionsüberprüfung der Sende-/Empfangseinheit zu ermöglichen, mittels derer die Objektdetektion nicht beeinträchtigt wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich und umfasst einen statischen Sensorteil und einen bezüglich diesem rotierenden Messkopf. Der Messkopf weist eine Sende-/Empfangseinheit auf, welche einen Sendelichtstrahlen emittierenden Sender und einen Empfangslichtstrahlen empfangenden Empfänger aufweist. Im Messkopf sind erste Lichtführungselemente vorgesehen, mittels derer ein Teil der Sendelichtstrahlen als Reflexionslichtstrahlen ausgekoppelt wird und wenigstens einer Referenzstrecke zugeführt werden kann. Im Messkopf sind zweite Lichtführungselemente vorgesehen, mittels derer die Reflexionslichtstrahlen aus der Referenzstrecke dem Empfänger zugeführt werden können. Die Referenzstrecke ist im statischen Sensorteil angeordnet, wobei nur innerhalb eines begrenzten Referenzbereiches der Drehpositionen des Messkopfes relativ zum statischen Sensorteil die Lichtführungselemente an Übertragungsstellen der Referenzstrecke positioniert sind, so dass die Reflexionslichtstrahlen vom Sender über die Referenzstrecke zum Empfänger geführt sind und dadurch Referenzmessungen durchgeführt werden können.

Ein wesentlicher Vorteil des erfindungsgemäßen optischen Sensors besteht darin, dass die Mittel zur Durchführung von Referenzmessungen, mittels derer die Funktionsfähigkeit der Sende-/Empfangseinheit überprüft werden, die Objektdetektion nicht beeinträchtigen.

Insbesondere ist vorteilhaft, dass zur Durchführung der Referenzmessungen auf dem Fenster des Messkopfes, durch welches die Sendelichtstrahlen in den Überwachungsbereich geführt werden, keine Referenzelemente oder sonstige Elemente einer Referenzstrecke angebracht werden müssen. Dadurch können die Sendelichtstrahlen ungehindert über den gesamten Fensterbereich des Messkopfes austreten, so dass die mit den Sendelichtstrahlen durchgeführte Objektdetektion im Überwachungsbereich nicht behindert wird. Der nutzbare Winkelbereich der Sendelichtstrahlen ist dadurch vergrößert.

Dies wird erfindungsgemäß dadurch erreicht, dass von den vom Sender emittierten Sendelichtstrahlen ein kleiner Randbereich als Reflexionslichtstrahlen ausgekoppelt wird und dann über die Lichtführungselemente und die Referenzstrecke vollständig im Innenraum des optischen Sensors zum Empfänger zurückgeleitet wird. Der Lichtweg der Reflexionslichtstrahlen ist somit völlig getrennt vom Lichtweg der Sendelichtstrahlen und Empfangslichtstrahlen, die zur Objektdetektion verwendet werden müssen.

Ein weiterer wesentlicher Aspekt der Erfindung besteht darin, dass die einzelnen Komponenten zur Durchführung der Referenzmessungen einen optischen Schalter bilden. Der optische Schalter funktioniert dabei derart, dass nur für diskrete, beschränkte Bereiche von Drehpositionen des Messkopfes die Referenzmessungen durchgeführt werden. Dies wird dadurch erreicht, dass mit den Lichtführungselementen, wobei ein erstes Lichtführungselement die Reflexionslichtstrahlen vom Sender zur Referenzstrecke führt und wobei ein zweites Lichtführungselement die Reflexionslichtstrahlen von der Referenzstrecke zum Empfänger führt, erste Komponenten zur Durchführung der Referenzmessungen auf dem rotierenden Messkopf angeordnet sind, wogegen mit der Referenzstrecke die weitere Komponente zur Durchführung der Referenzmessungen ortsfest und stationär auf dem statischen Sensorteil angeordnet ist. Die Schalterwirkung ergibt sich somit allein durch die Drehbewegung des Messkopfes relativ zum statischen Sensorteil. Nur innerhalb eines kleinen begrenzten Ausschnitts, das heißt des Referenzbereiches, sind die Lichtführungselemente so an der Übertragungsstelle der Referenzstrecke positioniert, dass die vom Sender emittierten und im ersten Lichtführungselement geführten Reflexionslichtstrahlen über eine Übertragungsstelle in die Referenzstrecke eingekoppelt und dann über die zweite Übertragungsstelle aus der Referenzstrecke ausgeführt und in das dort positionierte zweite Lichtführungselement eingeführt werden und so zum Empfänger geführt werden.

Durch die Anordnung und Dimensionierung der Lichtführungselemente und der Referenzstrecke kann der Referenzbereich und damit die Dauer der Referenzmessungen vorgegeben werden.

Durch die Ausbildung der Referenzstrecke können wiederum Art und Umfang der Referenzmessungen vorgegeben werden, die vorteilhaft nicht nur zur Überprüfung der Funktionsfähigkeit, sondern auch zur Kalibrierung der Sende-/Empfangseinheit verwendet werden können.

Vorteilhaft ist bei diesem optischen Sensor, dass die Referenzstrecke ein oder mehrere Referenzelemente aufweist, welche jeweils eine Oberfläche mit definierten Reflektivitäten aufweisen. Die Menge der an den Referenzelementen reflektierten Reflexionslichtstrahlen werden zur Durchführung von Referenzmessungen ausgewertet.

Die einzelnen Referenzelemente können dabei jeweils gleichförmige Reflektivitäten aufweisen, die von den Reflexionslichtstrahlen zeitlich nacheinander überstrichen werden.

Je nach Art der Reflektivität der Oberflächen der Referenzelemente werden die Reflexionslichtstrahlen verschieden stark reflektiert. Demzufolge ergeben sich entsprechend unterschiedliche Empfangspegel. Die bei den Referenzmessungen erhaltenen Empfangspegel werden mit einer Folge von Sollwerten, die der Folge der Referenzelemente entspricht, verglichen, wodurch geprüft werden kann, ob die Sende-/Empfangseinheit fehlerfrei arbeitet.

Gemäß einer vorteilhaften Weiterbildung der Erfindung sind mehrere Referenzstrecken in verschiedenen Positionen am statischen Sensorteil vorgesehen. Die Reflexionslichtstrahlen durchlaufen bei Drehung des Messkopfes nacheinander die einzelnen Referenzstrecken.

In diesem Fall sind mehrere Referenzbereiche vorhanden, wobei in jedem Referenzbereich die Lichtführungselemente an jeweils einer Referenzstrecke so positioniert sind, dass die Reflexionslichtstrahlen durch diese Referenzstrecke geführt wird. Damit können mit den einzelnen Referenzstrecken pro Umdrehung mehrere Referenzmessungen durchgeführt werden.

Vorteilhaft werden dabei in den einzelnen Referenzstrecken unterschiedliche Referenzmessungen durchgeführt, was dadurch erreicht werden kann, dass in den einzelnen Referenzstrecken unterschiedliche Referenzelemente angeordnet sind.

Besonders vorteilhaft sind Mittel vorgesehen, mittels derer der Lichtweg der Reflexionslichtstrahlen vom Sender über die oder eine Referenzstrecke zurück zum Empfänger gegen einen Einfall von Fremdlicht geschützt sind.

Damit ist gewährleistet, dass die Referenzmessungen nicht durch Fremdlichteinstrahlungen verfälscht werden.

Zweckmäßigerweise sind zur Führung der Reflexionslichtstrahlen rohrförmige Lichtführungselemente vorgesehen.

Damit bilden bereits die Lichtführungselemente selbst einen effizienten Schutz gegen Fremdlichteinstrahlung.

Weiterhin vorteilhaft sind der Sender und der Empfänger jeweils in einem Optiktubus angeordnet. Die Lichtführungselemente münden jeweils an einem der Optiktuben aus.

Diese Anordnung ist deshalb vorteilhaft, da auf diese Weise Randstrahlen der vom Sender emittierten Sendelichtstrahlen, die an den Wänden des Optiktubus verlaufen und nicht zur Objektdetektion verwendet werden, als Reflexionslichtstrahlen genutzt werden können.

Zudem bildet die Ankopplung der Lichtführungselemente an die Optiktuben eine fremdlichtsichere Optikanordnung.

Weiterhin wird vorteilhaft auch die Referenzstrecke in einer lichtdichten Kapselung geführt, wodurch die Fremdlichtsicherheit weiter erhöht wird. Schließlich sind die Übertragungsstellen der oder jeder Referenzstrecke so an die Lichtführungselemente angepasst, dass im jeweiligen Referenzbereich die Lichtführungselemente direkt an den Übertragungsstellen angrenzen, so dass an den Nahtstellen zwischen diesen Einheiten auch nahezu kein Fremdlicht eindringen kann.

Die Fremdlichtsicherheit kann schließlich dadurch noch weiter erhöht werden, dass in den Referenzbereichen auch der Sender und/oder der Empfänger im Fensterbereich gegen Fremdlichteinfall abgeschottet sind.

Gemäß einer vorteilhaften Ausgestaltung der Erfindung ist der optische Sensor als Sicherheitssensor ausgebildet, das heißt der optische Sensor erfüllt die Sicherheitsanforderungen für einen Einsatz im Personenschutz. Zur Erfüllung der Sicherheitsanforderungen weist der optische Sensor insbesondere eine redundant aufgebaute Auswerteeinheit auf, die zur Auswertung der in der Sende-/Empfangseinheit generierten Signale dient. Die redundante Auswerteeinheit kann beispielsweise aus zwei sich zyklisch gegenseitig überwachenden Rechnereinheiten gebildet sein.

Die Fehlersicherheit des optischen Sensors wird durch die erfindungsgemäß durchgeführten Referenzmessungen noch weiter erhöht.

Die Erfindung wird im Folgenden anhand der Zeichnungen erläutert. Es zeigen:
- Figur 1:: Schematische Darstellung eines Ausführungsbeispiels des erfindungsgemäßen optischen Sensors.
- Figur 2:: Einzeldarstellung der Sende-/Empfangseinheit für den optischen Sensor gemäß Figur 1.
- Figur 3a-c:: Darstellungen der Komponenten zur Durchführung von Referenzmessungen bei unterschiedlichen Drehpositionen des Messkopfes des optischen Sensors gemäß Figur 1.

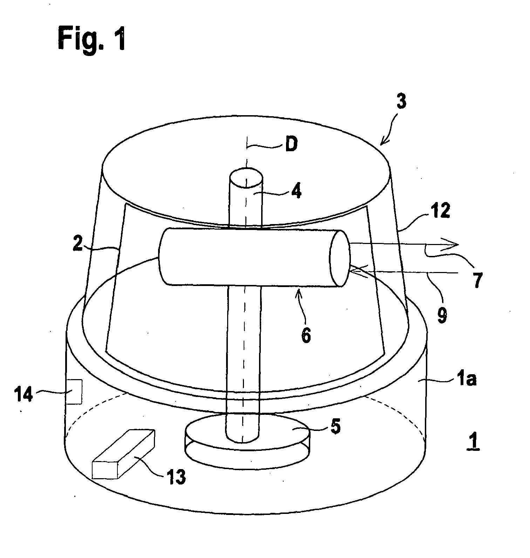

Figur 1 zeigt schematisch den Aufbau eines optischen Sensors 1 für eine Objektdetektion in einem Überwachungsbereich. Der optische Sensor 1 weist einen um eine Drehachse D drehbaren Messkopf 2 auf, der in einem ortsfesten, das heißt nicht mitdrehenden statischen Sensorteil 1a mit einem Gehäuse 3 angeordnet ist. Der Messkopf 2 ist auf einer entlang der Drehachse D verlaufenden Welle 4 gelagert, die mittels eines Antriebs 5 in eine Drehbewegung versetzt wird. Der Antrieb 5 umfasst einen Elektromotor mit einem ortsfest angeordneten Stator und einem mit der Welle 4 mitrotierenden Rotor. Während der mit dem Messkopf 2 durchgeführten Objektdetektion dreht sich dieser mit einer konstanten Drehzahl. Die aktuelle Drehposition des Messkopfes 2 wird mit einem Messgeber, insbesondere einem Winkelgeber, erfasst.

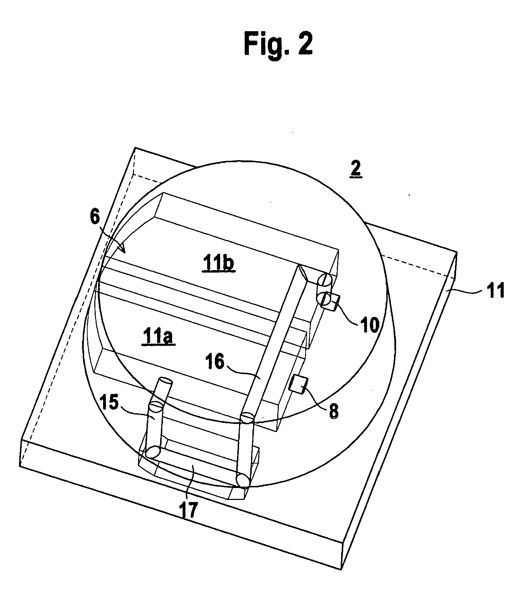

In dem Messkopf 2 ist eine Sende-Empfangseinheit 6 integriert, welche ein optisches Distanzsensorelement bildet. Die einzelnen Komponenten der Sende-/Empfangseinheit 6 sind in Figur 2 dargestellt.

Die Sende-/Empfangseinheit 6 umfasst einen Sendelichtstrahlen 7 emittierenden Sender 8 in Form einer Laserdiode. Der Laserdiode kann unmittelbar eine nicht gesondert dargestellte Sendeoptik in Strahlrichtung der Sendelichtstrahlen 7 nachgeordnet sein. Die Sende-/Empfangseinheit 6 umfasst weiter einen Empfangslichtstrahlen 9 empfangenden Empfänger 10 in Form einer Photodiode oder dergleichen. Der Sender 8 ist in einem lichtundurchlässigen ersten Optiktubus 11 a angeordnet. Der Empfänger 10 ist in einem zweiten Optiktubus 11b angeordnet.

Wie aus Figur 1 ersichtlich, werden die Sendelichtstrahlen 7 und Empfangslichtstrahlen 9 durch einen Abschnitt des Gehäuses 3 geführt, welcher ein Fenster 12 bildet. Das Fenster 12 erstreckt sich in Umfangsrichtung des Gehäuses 3 um den vollen Winkelbereich von 360°. Durch die Drehbewegung des Messkopfes 2 werden die Sendelichtstrahlen 7 periodisch über den gesamten Winkelbereich von 360° geführt, so dass dieser Bereich auch den Überwachungsbereich bildet, innerhalb dessen eine Objektdetektion erfolgt. Durch die Distanzmessung und die gleichzeitige Erfassung der aktuellen Drehposition des Messkopfes 2 können bei der Objektdetektion die genauen Objektpositionen ermittelt werden.

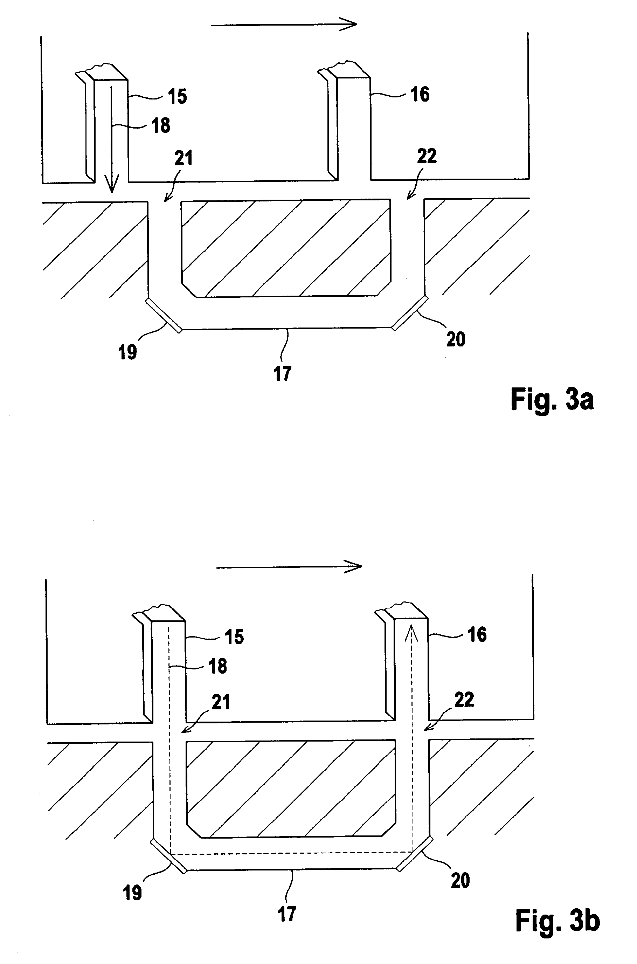

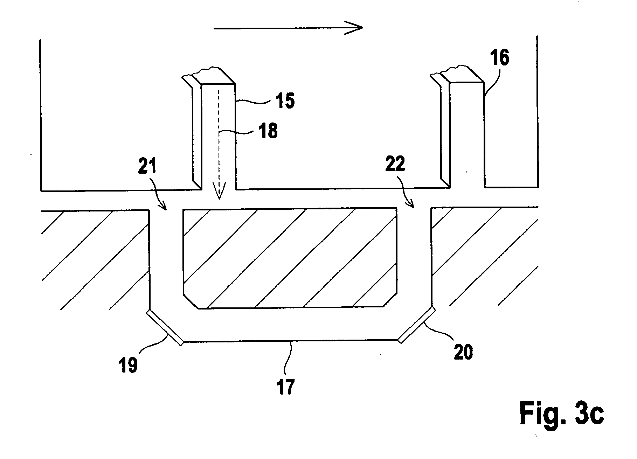

Die mit der Sende-/Empfangseinheit 6 durchgeführten Distanzmessungen erfolgen nach einem Lichtlaufzeitverfahren. Hierzu emittiert der Sender 8 Sendelichtstrahlen 7 in Form von Sendelichtpulsen. Zur Distanzbestimmung werden die Lichtlaufzeiten gemessen, die jeweils ein Sendelichtpuls zu einem zu detektierenden Objekt und zurück zum Empfänger 10 benötigt. Die entsprechenden Strahlengänge zeigen die Figuren 2 und 3. Die vom Sender 8 emittierten Sendelichtstrahlen 7 durchsetzen das Fenster 12 und verlaufen dann im Überwachungsbereich. Dort werden die Sendelichtstrahlen 7 von einem nicht dargestellten Objekt reflektiert und werden als Empfangslichtstrahlen 9 durch das Fenster 12 zurück auf den Empfänger 10 geführt.

Zur Auswertung der in der Sende-/Empfangseinheit 6 generierten Signale ist im Messkopf 2 eine Auswerteeinheit 13 vorgesehen. Zur Erfüllung der Anforderungen für den Einsatz im Bereich des Personenschutzes sind diese zweikanalig ausgebildet, insbesondere in Form sich gegenseitig zyklisch überwachender Rechnereinheiten.

In der Auswerteeinheit 13 wird in Abhängigkeit der Signale der Sende-/Empfangseinheit 6 ein Schaltsignal generiert und über einen Schaltausgang 14 ausgegeben. Bei einem Einsatz im Bereich der Sicherheitstechnik wird mit einem optischen Sensor 1 ein Gefahrenbereich an einer Anlage überwacht. Wird mit dem optischen Sensor 1 kein Objekt erkannt und wird eine fehlerfreie Funktion des optischen Sensors 1 durch die interne Geräteprüfung festgestellt, so wird über den Schaltausgang 14 ein Freigabesignal ausgegeben, das die Anlage in Betrieb setzt. Wird dagegen im optischen Sensor 1 eine interne Fehlfunktion festgestellt, oder es wird ein Objekt im Gefahrenbereich detektiert, so wird über den Schaltausgang 14 ein Abschaltbefehl ausgegeben, durch welchen die Anlage stillgesetzt wird.

Zur Erfüllung der Anforderungen in der Sicherheitstechnik werden zudem Referenzmessungen durchgeführt, mittels derer die Funktionsfähigkeit der Sende-/Empfangseinheit 6 überprüft werden kann. Zudem ist mittels der Referenzmessungen eine Kalibrierung der Sende-/Empfangseinheit 6 möglich.

Figur 2 zeigt die einzelnen Komponenten zur Durchführung der Referenzmessungen im Überblick. Als erste Komponenten sind erste und zweite rohrförmige Lichtführungselemente 15, 16 vorgesehen, welche aus einem lichtundurchlässigen Material bestehen. In den Ecken der Lichtführungselemente 15, 16 sind Umlenkelemente zum Umlenken des Lichts vorgesehen. Alternativ können auch Lichtleiter eingesetzt werden. Diese ersten und zweiten Lichtführungselemente 15, 16 sind auf dem Messkopf 2 angeordnet, das heißt sie rotieren mit dem Messkopf 2 mit. Als weitere Komponenten zur Durchführung der Referenzmessungen ist im statischen Sensorteil 1a eine Referenzstrecke 17 vorgesehen, die mit dem statischen Sensorteil 1a stationär, das heißt nicht drehend angeordnet ist.

Die ersten Lichtführungselemente 15 münden an einer Seitenwand des Optiktubus 11a des Senders 8 aus und verlaufen dann zur Oberseite des statischen Sensorteils 1a, wo die Referenzstrecke 17 angeordnet ist. Die ersten Lichtführungselemente 15 dienen somit zur Auskopplung eines kleinen Randbereichs der vom Sender 8 emittierten Sendelichtstrahlen 7. Vorteilhaft ist im Bereich der Ausmündung der ersten Lichtführungselemente 15 in dem Optiktubus 11 a ein kleiner nicht dargestellter Umlenkspiegel vorgesehen, mit dem die am Rand des Optiktubus 11a verlaufenden Sendelichtstrahlen 7 als Reflexionslichtstrahlen 18 in die ersten Lichtführungselemente 15 eingekoppelt werden.

Mit den ersten Lichtführungselementen 15 werden die Reflexionslichtstrahlen 18 zur Oberseite des statischen Sensorteils 1a geführt, wo auch die Referenzstrecke 17 angeordnet ist.

Die zweiten Lichtführungselemente 16 dienen dazu, Reflexionslichtstrahlen 18, die an den ersten Lichtführungselementen 15 in die Referenzstrecke 17 eingekoppelt werden und diese Referenzstrecke 17 durchsetzen, von dieser Referenzstrecke 17 zum Empfänger 10 zu führen.

Da sich der Messkopf 2 mit den Lichtführungselementen 15, 16 relativ zum statischen Sensorteil 1a mit der Referenzstrecke 17 dreht, gibt es nur einen schmalen Referenzbereich, das heißt der Bereich der Drehpositionen des Messkopfes 2 relativ zum statischen Sensorteil 1a, wo die Lichtführungselemente 15, 16 so positioniert sind, dass die Reflexionslichtstrahlen 18 von den ersten Lichtführungselementen 15 in die Referenzstrecke 17 eingekoppelt werden und die aus der Referenzstrecke 17 wieder austretenden Reflexionslichtstrahlen 18 über die zweiten Lichtführungselemente 16 zum Empfänger 10 geführt werden können.

Die Situationen bei unterschiedlichen Drehpositionen des Messkopfes 2 sind in den Figuren 3a bis 3c zeitaufgelöst dargestellt. Dabei ist mit den Pfeilen die Drehrichtung des Messkopfes 2 bezeichnet.

Die Figuren 3a bis 3c zeigen auch die Struktur der Referenzstrecke 17. Die Referenzstrecke 17 ist von einem im Wesentlichen u-förmigen Kanal mit lichtundurchlässigen Wänden gebildet. Die unteren Ecken des Kanals sind abgeschrägt. An jeder Abschrägung ist ein Referenzelement 19, 20 angeordnet, welches eine Oberfläche mit einer definierten Reflexivität aufweist. Im vorliegenden Fall weist ein erstes Referenzelement 19 eine stark gerichtet reflektierende Oberfläche auf, während das zweite Referenzelement 20 eine diffus reflektierende Oberfläche aufweist.

An einem oberen Rand der Referenzstrecke 17 ist als erste Übertragungsstelle eine an der Oberseite des statischen Sensorteils 1a ausmündende Lichteintrittsöffnung 21 vorgesehen, welche zur Einkopplung der Reflexionslichtstrahlen 18 aus den ersten Lichtführungselementen 15 dient. Im vorliegenden Fall entspricht der Querschnitt der Lichteintrittsöffnung 21 dem Querschnitt der Lichtführungselemente 15. Prinzipiell kann der Querschnitt der Lichteintrittsöffnung 21 auch größer oder kleiner als der Querschnitt der ersten Lichtführungselemente 15 sein.

Am zweiten oberen Rand der Referenzstrecke 17 ist als zweite Übertragungsstelle eine an der Oberseite des statischen Sensorteils 1a ausmündende Lichtaustrittsöffnung 22 vorgesehen, welche zur Auskopplung der Reflexionslichtstrahlen 18 aus der Referenzstrecke 17 in die zweiten Lichtführungselemente 16, welche zum Empfänger führen, dient. Im vorliegenden Fall entspricht der Querschnitt der Lichtaustrittsöffnung 22 dem Querschnitt der zweiten Lichtführungselemente 16. Prinzipiell kann der Querschnitt der Lichtaustrittsöffnung 22 auch größer oder kleiner sein als der Querschnitt der zweiten Lichtführungselemente 16.

Figur 3a zeigt eine Drehposition des Messkopfes 2, bei welcher die ersten Lichtführungselemente 15 noch nicht im Bereich der Lichteintrittsöffnung 21 der Referenzstrecke 17 sind. Die Reflexionslichtstrahlen 18 werden daher nicht über die Lichteintrittsöffnung 21 in die Referenzstrecke 17 eingekoppelt, das heißt in dieser Drehposition des Messkopfes 2 kann keine Referenzmessung durchgeführt werden.

Dasselbe gilt für die in Figur 3c dargestellte Drehposition des Messkopfes, in welcher die ersten Lichtführungselemente 15 an der Lichteintrittsöffnung 21 bereits vorbeigeführt sind.

Eine Referenzmessung kann nur innerhalb eines Referenzbereiches der Drehpositionen des Messkopfes 2 erfolgen, bei welcher die ersten Lichtführungselemente 15 wenigstens teilweise vor der Lichteintrittsöffnung 21 der Referenzstrecke 17 positioniert sind. Figur 3b zeigt den Fall, wo die ersten Lichtführungselemente 15 exakt vor der Lichteintrittsöffnung 21 der Referenzstrecke 17 positioniert sind. Die Konstruktion der Lichtführungselemente 15, 16 und der Referenzstrecke 17 sind so aufeinander abgestimmt, dass dann, wie in Figur 3b dargestellt, wenn die ersten Lichtführungselemente 15 an der Lichteintrittsöffnung 21 liegen, auch die zweiten Lichtführungselemente 16 vor der Lichtaustrittsöffnung 22 der Referenzstrecke 17 liegen. Somit können in der in Figur 3b dargestellten Drehposition des Messkopfes 2 Referenzmessungen durchgeführt werden. In diesem Fall gelangen die Reflexionslichtstrahlen 18 aus den ersten Lichtführungselementen 15 über die Lichteintrittsöffnung 21 in die Referenzstrecke 17, werden dann zuerst vom ersten Referenzelement 19 und dann vom zweiten Referenzelement 20 reflektiert und gelangen dann über die Lichtaustrittsöffnung 22 in die zweiten Lichtführungselemente 16, über welche die Reflexionslichtstrahlen 18 zum Empfänger geführt werden.

Die Referenzmessungen werden in der Auswerteeinheit 13 ausgewertet. Hierzu werden die bei der Reflexion in den Referenzelementen 19, 20 erhaltenen Empfangssignale am Empfänger 10 mit vorgegebenen Sollwerten verglichen, um abzuprüfen, ob die Sende-/Empfangseinheit 6 fehlerfrei arbeitet.

Für den Fall, dass der Querschnitt der ersten Lichtführungselemente 15 kleiner als die Lichteintrittsöffnung 21 der Referenzstrecke 17 ist, werden innerhalb des Referenzbereiches die aus den ersten Lichtführungselementen 15 austretenden Reflexionslichtstrahlen 18 durch die Drehung des Messkopfes 2 sukzessive über die Lichteintrittsöffnung 21 geführt. In diesem Fall können mit den Reflexionslichtstrahlen 18 besonders gut auch inhomogene Strukturen der Referenzelemente 19, 20 abgetastet werden.

### Bezugszeichenliste

- (1): optischer Sensor
- (1a): statisches Sensorteil
- (2): Messkopf
- (3): Gehäuse
- (4): Welle
- (5): Antrieb
- (6): Sende-/Empfangseinheit
- (7): Sendelichtstrahlen
- (8): Sender
- (9): Empfangslichtstrahlen
- (10): Empfänger
- (11a): Optiktubus
- (11b): Optiktubus
- (12): Fenster
- (13): Auswerteeinheit
- (14): Schaltausgang
- (15): Lichtführungselement
- (16): Lichtführungselement
- (17): Referenzstrecke 17
- (18): Reflexionslichtstrahlen
- (19): Referenzelement
- (20): Referenzelement
- (21): Lichteintrittsöffnung
- (22): Lichtaustrittsöffnung
- (D): Drehachse

## Patentansprüche

1. Optischer Sensor (1) zur Erfassung von Objekten in einem Überwachungsbereich, mit einem statischen Sensorteil (1a) und einem bezüglich diesem rotierenden Messkopf (2), wobei der Messkopf (2) eine Sende-/Empfangseinheit (6) aufweist, welche einen Sendelichtstrahlen (7) emittierenden Sender (8) und einen Empfangslichtstrahlen (9) empfangenden Empfänger (10) aufweist, **dadurch gekennzeichnet, dass** im Messkopf (2) erste Lichtführungselemente (15) vorgesehen sind, mittels derer ein Teil der Sendelichtstrahlen (7) als Reflexionslichtstrahlen (18) ausgekoppelt wird und wenigstens einer Referenzstrecke (17) zugeführt werden kann, dass im Messkopf (2) zweite Lichtführungselemente (16) vorgesehen sind, mittels derer die Reflexionslichtstrahlen (18) aus der Referenzstrecke (17) dem Empfänger (10) zugeführt werden können, und dass die Referenzstrecke (17) im statischen Sensorteil (1a) angeordnet ist, wobei nur innerhalb eines begrenzten Referenzbereiches der Drehpositionen des Messkopfes (2) relativ zum statischen Sensorteil (1a) die Lichtführungselemente (15, 16) an Übertragungsstellen der Referenzstrecke (17) positioniert sind, so dass die Reflexionslichtstrahlen (18) vom Sender (8) über die Referenzstrecke (17) zum Empfänger (10) geführt sind und dadurch Referenzmessungen durchgeführt werden können.

2. Optischer Sensor (1) nach Anspruch 1, **dadurch gekennzeichnet, dass** die Referenzstrecke (17) ein oder mehrere Referenzelemente (19, 20) aufweist, welche jeweils eine Oberfläche mit definierten Reflektivitäten aufweisen, wobei die Menge der an den Referenzelementen (19, 20) reflektierten Reflexionslichtstrahlen (18) zur Durchführung von Referenzmessungen ausgewertet werden.

3. Optischer Sensor (1) nach einem der Ansprüche 1 oder 2, **dadurch gekennzeichnet, dass** mehrere Referenzstrecken (17) in verschiedenen Positionen am statischen Sensorteil (1a) vorgesehen sind, wobei die Reflexionslichtstrahlen (18) bei Drehung des Messkopfes (2) nacheinander die einzelnen Referenzstrecken (17) durchlaufen.

4. Optischer Sensor (1) nach Anspruch 3, **dadurch gekennzeichnet, dass** in den einzelnen Referenzstrecken (17) unterschiedliche Referenzmessungen durchgeführt werden.

5. Optischer Sensor (1) nach einem der Ansprüche 1 bis 4, **dadurch gekennzeichnet, dass** mittels der Referenzmessungen eine Überprüfung und/oder Kalibrierung der Sende-/Empfangseinheit (6) erfolgt.

6. Optischer Sensor (1) nach einem der Ansprüche 1 bis 5, **dadurch gekennzeichnet, dass** Mittel vorgesehen sind, mittels derer der Lichtweg der Reflexionslichtstrahlen (18) vom Sender (8) über die oder eine Referenzstrecke (17) zurück zum Empfänger (10) gegen einen Einfall von Fremdlicht geschützt sind.

7. Optischer Sensor (1) nach einem der Ansprüche 1 bis 6, **dadurch gekennzeichnet, dass** zur Führung der Reflexionslichtstrahlen (18) rohrförmige Lichtführungselemente (15, 16) vorgesehen sind.

8. Optischer Sensor (1) nach Anspruch 7, **dadurch gekennzeichnet, dass** der Sender (8) und der Empfänger (10) jeweils in einem Optiktubus (11a, b) angeordnet sind, wobei die Lichtführungselemente (15, 16) jeweils an einem der Optiktuben (11a, b) ausmünden.

9. Optischer Sensor (1) nach einem der Ansprüche 1 bis 8, **dadurch gekennzeichnet, dass** dieser ein Sicherheitssensor ist.

## Claims

1. Optical sensor (1) for detecting objects in a monitoring region, with a static sensor part (1a) and a measuring head (2) rotating with respect thereto, wherein the measuring head (2) comprises a transmitting/receiving unit (6), which comprises a transmitter (8) emitting transmitted light beams (7) and a receiver (10) receiving received light beams (9), **characterised in that** provided in the measuring head (2) are first light guide elements (15) by means of which a part of the transmitted light beams (7) is coupled out as reflected light beams (18) and can be conducted to at least one reference path (17), that provided in the measuring head (2) are second light guide elements (16) by means of which the reflected light beams (18) can be conducted from the reference path (17) to the receiver (10), and that the reference path (17) is arranged in the static sensor part (1a), wherein the light guide elements (15, 16) are positioned at transmission points of the reference path (17) only within a limited reference range of the rotational positions of the measuring head (2) relative to the static sensor part (1a) so that the reflected light beams (18) are guided from the transmitter (8) to the receiver (10) by way of the reference path (17) and reference measurements can thereby be carried out.

2. Optical sensor (1) according to claim 1, **characterised in that** the reference path (17) comprises one or more reference elements (19, 20) which each have a surface with defined reflectivities, wherein the amount of the reflected light beams (18) reflected at the reference elements (19, 20) is evaluated for carrying out reference measurements.

3. Optical sensor (1) according to one of claims 1 and 2, **characterised in that** several reference paths (17) are provided at the static sensor part (1a) in different positions, wherein the reflection light beams (18) successively transit the individual reference paths (17) when the measuring head (2) is rotated.

4. Optical sensor (1) according to claim 3, **characterised in that** different reference measurements are carried out in the individual reference paths (17).

5. Optical sensor (1) according to any one of claims 1 to 4, **characterised in that** checking and/or calibration of the transmitting/receiving unit (6) is or are carried out by means of the reference measurements.

6. Optical sensor (1) according to any one of claims 1 to 5, **characterised in that** means are provided by way of which the light path of the reflected light beams (18) from the transmitter (8) back to the receiver (10) via the or a reference path (17) is protected from incidence of extraneous light.

7. Optical sensor (1) according to any one of claims 1 to 6, **characterised in that** tubular light guide elements (15, 16) are provided for guidance of the reflected light beams (18).

8. Optical sensor (1) according to claim 7, **characterised in that** the transmitter (8) and the receiver (10) are each arranged in a respective optical tubus (11 a, b), wherein the light guide elements (15, 16) each communicate with a respective one of the optical tubi (11 a, b).

9. Optical sensor (1) according to any one of claims 1 to 8, **characterised in that** this is a security sensor.

## Revendications

1. Capteur optique (1) pour la détection d'objets dans une zone de surveillance, comprenant une partie détectrice statique (1a) et une tête de mesure (2) rotative par rapport à celle-ci, la tête de mesure (2) présentant une unité d'émission/réception (6), laquelle présente un émetteur (8) émettant des rayons lumineux d'émission (7) et un récepteur (10) recevant des rayons lumineux de réception (9), **caractérisé en ce que** la tête de mesure (2) comporte de premiers éléments de guidage de lumière (15) au moyen desquels une partie des rayons lumineux d'émission (7) est découplée en tant que rayons lumineux de réflexion (18) et peut être amenée à au moins une section de référence (17), que la tête de mesure (2) comporte de seconds éléments de guidage de lumière (16) au moyen desquels les rayons lumineux de réflexion (18) sortant de la section de référence (17) peuvent être amenés au récepteur (10), et que la section de référence (17) est disposée dans la partie détectrice statique (la), les éléments de guidage de lumière (15, 16) étant positionnés au niveau de points de transmission de la section de référence (17) seulement dans une plage de référence limitée des positions de rotation de la tête de mesure (2) par rapport à la partie détectrice statique (la), de telle sorte que les rayons lumineux de réflexion (18) sont guidés de l'émetteur (8) vers le récepteur (10) via la section de référence (17) et que, de ce fait, des mesures de référence peuvent être effectuées.

2. Capteur optique (1) selon la revendication 1, **caractérisé en ce que** la section de référence (17) présente un ou plusieurs éléments de référence (19, 20), lesquels présentent chacun une surface ayant des réflectivités définies, la quantité des rayons lumineux de réflexion (18) réfléchis sur les éléments de référence (19, 20) étant évaluée pour effectuer des mesures de référence.

3. Capteur optique (1) selon l'une des revendications 1 ou 2, **caractérisé en ce que** plusieurs sections de référence (17) sont prévues à différentes positions sur la partie détectrice statique (la), les rayons lumineux de réflexion (18) traversant successivement les différentes sections de référence (17) lors de la rotation de la tête de mesure (2).

4. Capteur optique (1) selon la revendication 3, **caractérisé en ce que** différentes mesures de référence sont effectuées dans les différentes sections de référence (17).

5. Capteur optique (1) selon l'une des revendications 1 à 4, **caractérisé en ce que** les mesures de référence permettent d'effectuer un contrôle et/ou un étalonnage de l'unité d'émission/réception (6).

6. Capteur optique (1) selon l'une des revendications 1 à 5, **caractérisé en ce qu'**il est prévu des moyens à l'aide desquels le chemin optique des rayons lumineux de réflexion (18) de l'émetteur (8) vers le récepteur (10) via la ou une section de référence (17) est protégé contre une incidence de lumière extérieure.

7. Capteur optique (1) selon l'une des revendications 1 à 6, **caractérisé en ce que** des éléments de guidage de lumière (15, 16) en forme de tube sont prévus pour guider les rayons lumineux de réflexion (18).

8. Capteur optique (1) selon la revendication 7, **caractérisé en ce que** l'émetteur (8) et le récepteur (10) sont disposés chacun dans un tube optique (11a, b), les éléments de guidage de lumière (15, 16) débouchant chacun au niveau d'un des tubes optiques (11a, b).

9. Capteur optique (1) selon l'une des revendications 1 à 8, **caractérisé en ce que** celui-ci est un capteur de sécurité.
